# DEMANDE DE BREVET EUROPEEN

(11) **EP 4 398 049 A1**
(43) Date de publication de la demande: **10.07.2024**
(21) Numéro de dépôt: 23208685.0
(22) Date de dépôt: 09.11.2023
(51) Int. Cl.: G04R 60/02, G04G 21/04

(54) **MONTRE ÉLECTROMÉCANIQUE CAPABLE DE COMMUNIQUER SANS CONTACT AVEC UN DISPOSITIF DE COMMUNICATION**

(30) Priorité: 19.12.2022 EP 22214713
(71) Demandeur: ETA SA Manufacture Horlogère Suisse, 2540 Grenchen (CH)
(72) Inventeur: CHRISTE, Laurent, 2504 Bienne (CH); KLOPFENSTEIN, François, 2800 Delémont (CH); BERTHOUD, Joerg, 2613 Villeret (CH)
(74) Mandataire: ICB SA

(57) **Abrégé**

La montre (50) comprend un mouvement électromécanique, muni d'un moteur pas-à-pas (2) et d'un circuit de commande (20) du moteur, et des moyens de communication sans contact avec un dispositif de communication extérieur (100) qui comprennent une antenne formée par la bobine (18) du moteur et sont agencés de manière à pouvoir recevoir un signal magnétique modulé en amplitude en fonction de données codées. Les moyens de communication sont agencés de manière à pouvoir générer des impulsions électriques de détection fournies à la bobine du moteur avec une fréquence d'impulsion correspondant à une fréquence de codage du signal magnétique. Ils comprennent un circuit de mesure (32), agencé pour pouvoir mesurer un temps de montée (T_{M}) de chaque impulsion électrique de détection d'une pluralité desdites impulsions électriques de détection générées lors d'une réception du signal magnétique, et un circuit de traitement (36) du temps de montée mesuré pour chaque impulsion électrique de détection, lequel est agencé pour déterminer le niveau, bas ou haut, du signal magnétique lors de chacune des impulsions électriques de détection sur la base dudit temps de montée, de sorte à déterminer les valeurs des bits des données codées contenues dans le signal magnétique.

## Description

### Domaine technique de l'invention

L'invention concerne une montre électromécanique capable de communiquer sans contact avec un dispositif de communication. La montre électromécanique comprend des moyens de communication agencés pour pouvoir recevoir des données d'un dispositif de communication extérieur via des signaux magnétiques émis par ce dernier, et de préférence pour pouvoir aussi transmettre des signaux magnétiques à ce dispositif de communication extérieur.

L'invention concerne aussi un procédé de communication sans contact entre une montre électromécanique et un dispositif de communication extérieur à la montre.

### Arrière-plan technologique

Le document EP 0 635 771 décrit un système de transmission et réception de données sans contact, lequel comprend un dispositif de communication et une montre électromécanique. Ce document enseigne l'utilisation d'une bobine formant un moteur d'entraînement d'une aiguille comme bobine d'émission et de réception de signaux magnétiques. La montre transmet principalement un signal d'horloge, notamment à 1 Hz, au dispositif de communication, via le circuit de commande du moteur, en particulier par des impulsions motrices. Dans un mode avantageux, il est prévu d'envoyer un signal d'horloge à plus haute fréquence via le circuit de commande du moteur qui est modifié à cet effet et de fournir des impulsions définissant le signal horloge transmis qui soient suffisamment courtes pour ne pas engendrer de pas du rotor du moteur. Le circuit de commande du moteur est modifié de manière à pouvoir recevoir, entre des pas effectués par le rotor, un signal magnétique du dispositif de communication, ce signal magnétique étant modulé en amplitude. En particulier, un démodulateur est incorporé dans le circuit de commande, lequel est agencé pour pouvoir démoduler un signal de tension induite dans la bobine qui est engendré dans cette bobine par le signal magnétique reçu, et des moyens de traitement du signal de tension démodulé sont également prévus dans le circuit de commande. Ensuite, le signal démodulé est fourni à un circuit spécifique qui gère sa transmission, en particulier des périodes de blocage de la transmission, à un circuit de décodage de l'information contenue dans le signal de tension démodulé et initialement dans le signal magnétique. On a donc ajouté au circuit de commande du moteur un dispositif de démodulation de signaux de tension analogiques, de sorte à obtenir des signaux digitaux correspondant qui puissent ensuite être décodés par un circuit logique de traitement de données. De manière générale, le système est prévu de telle sorte que la réception de signaux magnétiques n'est possible que dans des périodes entre des impulsions motrices, de sorte à ne pas devoir stopper momentanément l'avance de l'aiguille associé au moteur. Ainsi, le circuit de commande est mis en mode écoute par période successives sélectionnée.

Le dispositif de communication interne à la montre demande une modification importante du circuit de commande du moteur, en particulier par l'ajout d'un démodulateur de signaux de tension induite analogiques fournis par la bobine en réponse à la réception de signaux magnétiques modulés.

### Résumé de l'invention

L'invention se propose de fournir une montre / pièce d'horlogerie munie d'un moteur pas-à-pas et comprenant un circuit de commande de ce moteur et des moyens de communication sans contact avec un dispositif de communication extérieur qui puissent être relativement aisément incorporés dans une montre / pièce d'horlogerie du type électromécanique classique, notamment en utilisant essentiellement le hardware prévu dans un circuit de commande connu d'un moteur horloger ou en utilisant exclusivement le hardware prévu dans un tel circuit de commande muni de moyens de détection d'un champ magnétique extérieur, de sorte que l'introduction des moyens de communication dans la montre/ pièce d'horlogerie concerne seulement ou essentiellement un software de communication qui est implémenté dans cette montre / pièce d'horlogerie et qui utilise le hardware du circuit de commande du moteur horloger de manière à permettre une communication avec le dispositif de communication extérieur.

A cet effet, l'invention concerne une pièce d'horlogerie telle que définie généralement à la revendication 1. Des modes ou variantes de réalisation sont définis dans les revendications dépendantes de la revendication 1. A noter que le terme « pièce d'horlogerie » est un terme général qui englobe en particulier les montres.

L'invention se propose de fournir également un procédé de communication entre la pièce d'horlogerie selon l'invention et un dispositif de communication extérieur.

L'invention concerne ainsi également un procédé de communication tel que défini à la revendication 8. Des modes ou variantes de mise en oeuvre du procédé de communication sont définis dans les revendications dépendantes de la revendication 8.

### Brève description des figures

L'invention sera décrite ci-après de manière plus détaillée à l'aide des dessins annexés, donnés à titre d'exemples nullement limitatifs, dans lesquels :

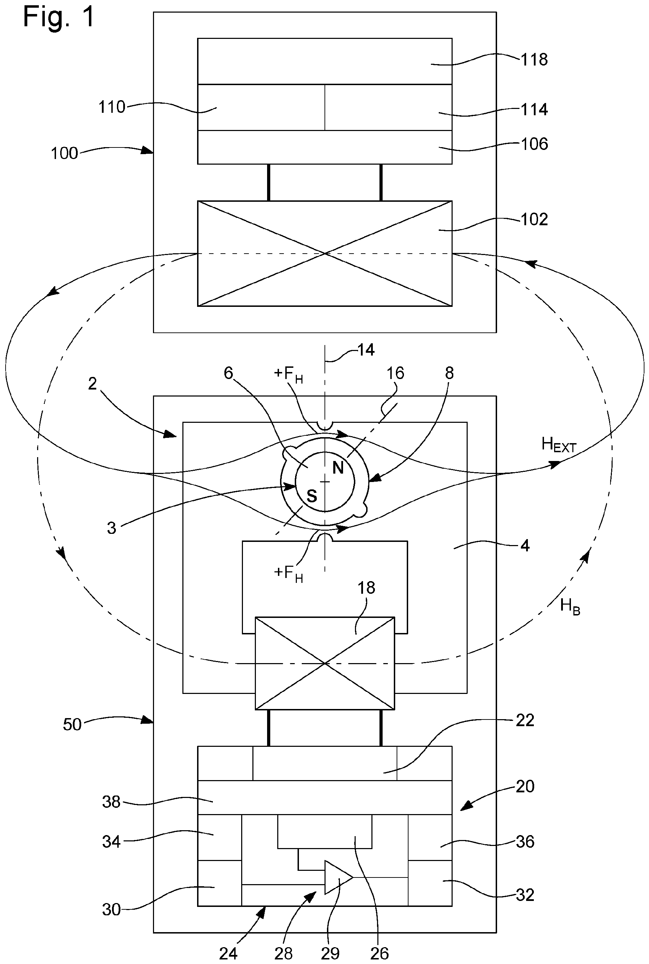

- la Figure 1 montre schématiquement une pièce d'horlogerie, selon un mode de réalisation principal de l'invention, et un dispositif de communication extérieur associé à cette pièce d'horlogerie ;
- la Figure 2 est une vue schématique du moteur horloger de la Figure 1 montrant schématiquement le flux magnétique de l'aimant permanent du rotor au niveau des deux isthmes du stator ;
- la Figure 3 est une vue schématique du moteur horloger de la Figure 1 montrant schématiquement le flux magnétique généré par la bobine lors d'une impulsion électrique positive ;
- la Figure 4 est une vue schématique du moteur horloger de la Figure 1 montrant schématiquement la circulation d'un champ magnétique extérieur dans le stator, ce champ magnétique extérieur se propageant selon une direction générale située dans le plan du stator et orthogonale à la direction d'alignement des deux isthmes et dans le sens négatif ;
- les Figures 5A et 5B sont deux graphes donnant des courbes de l'évolution du courant électrique dans la bobine, suite au déclenchement d'une impulsion électrique, pour l'aimant du rotor dans sa position de repos positive et une l'impulsion électrique en phase (polarité positive) respectivement pour les deux sens, négatif et positif, d'un champ magnétique extérieur ayant une direction générale selon la Figure 4, en fonction de diverses intensités de ce champ magnétique extérieur ;
- les Figures 6A et 6B sont deux graphes donnant des courbes de l'évolution du courant électrique dans la bobine, suite au déclenchement d'une impulsion électrique, pour l'aimant du rotor dans sa position de repos positive et une l'impulsion électrique en contre-phase (polarité négative) respectivement pour les deux sens, négatif et positif, d'un champ magnétique ayant une direction générale selon la Figure 4, en fonction de diverses intensités de ce champ magnétique extérieur ;
- la Figure 7 est un tableau donnant l'évolution temporelle de la montée du courant électrique dans la bobine, suite au déclenchement d'une impulsion électrique, dans les diverses configurations magnétiques possibles au niveau des deux isthmes du stator, pour un champ magnétique extérieur nul ou faible et un champ magnétique extérieur relativement fort ;
- la Figure 8 montre une séquence de données binaires transmises par la pièce d'horlogerie de la Figure 1 via la bobine d'un moteur qui est prévu également pour entraîner un organe d'affichage analogique ; et
- la Figure 9 montre une réception par la pièce d'horlogerie de données codées dans un signal magnétique modulé qui est transmis par le dispositif de communication extérieur.

### Description détaillée de l'invention

En référence aux figures, on décrira ci-après une pièce d'horlogerie 50 selon un mode de réalisation principal de l'invention, avec diverses variantes, ainsi qu'un procédé de communication entre cette pièce d'horlogerie et un dispositif de communication extérieur 100 selon un mode de mise en oeuvre général, avec diverses variantes particulières.

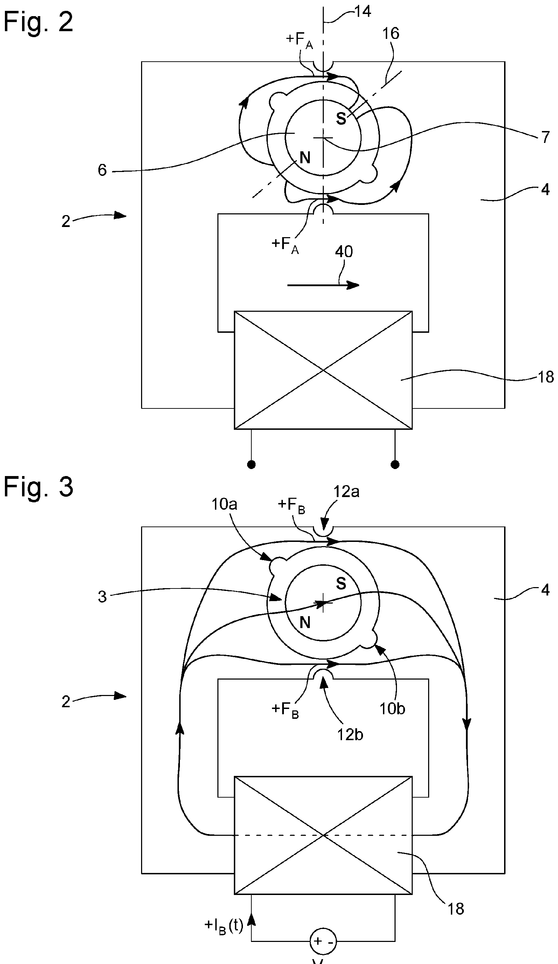

La pièce d'horlogerie 50 comprend un mouvement électromécanique muni d'un moteur 2, du type pas-à-pas, comprenant un rotor 3 muni d'un aimant permanent bipolaire 6, présentant un axe d'aimantation perpendiculaire à l'axe de rotation 7 de ce rotor, et un stator 4 définissant un circuit magnétique et une ouverture 8 qui forme un logement pour l'aimant permanent. Le stator définit aussi deux isthmes 12a et 12b en périphérie de l'ouverture 8, lesquels sont diamétralement opposés selon une première direction 14 perpendiculaire à l'axe de rotation 7, et deux positions de repos stables pour le rotor dans lesquelles l'aimant permanent 6, à savoir son axe d'aimantation, est orienté selon une deuxième direction 16 respectivement dans les deux sens, cette deuxième direction étant décalée angulairement relativement à la première direction 14. Les deux positions de repos sont classiquement déterminées par deux encoches 10a et 10b prévues au bord de l'ouverture 8 et diamétralement opposées. L'aimant permanent 6 génère dans chacune de ses deux positions de repos un premier flux magnétique F_{A} traversant les deux isthmes sensiblement selon une troisième direction 40, orthogonale à la première direction 14, respectivement dans les deux sens. Une première position de repos, dite aussi position de repos positive, correspond à un sens positif du premier flux magnétique F_{A} dans les deux isthmes, noté + F_{A} (voir Fig.2), et la seconde position de repos, dite aussi position de repos négative, correspond à un sens négatif du premier flux magnétique F_{A} dans les deux isthmes, noté -F_{A}.

Le moteur 2 comprend en outre une bobine 18 montée sur ledit circuit magnétique de manière à pouvoir générer, lorsqu'elle est alimentée par une impulsion électrique positive + I_{B}(t) ou par une impulsion électrique négative - I_{B}(t), un deuxième flux magnétique F_{B} traversant les deux isthmes sensiblement selon la troisième direction 40 respectivement dans ledit sens positif, soit + F_{B} (voir Fig. 3), et ledit sens négatif, soit - F_{B}. On notera que le flux magnétique F_{B} de la bobine 18 impose, après un certain délai suite au déclenchement d'une impulsion électrique, le sens du flux magnétique dans les deux isthmes, lequel arrive rapidement à saturation même lorsque le flux magnétique de l'aimant F_{A} est de sens opposé à celui de la bobine dans les deux isthmes.

La pièce d'horlogerie 50 comprend encore un circuit de commande 20 du moteur 2 qui est agencé de manière à pouvoir générer des impulsions électriques motrices pour alimenter la bobine et entraîner en rotation le rotor. De manière générale, la pièce d'horlogerie 50 comprend des moyens de communication sans contact avec un dispositif de communication extérieur 100, ces moyens de communication comprenant une antenne formée par la bobine 18 du moteur pas-à-pas 2 et étant agencés de manière à pouvoir recevoir du dispositif de communication extérieur des données codées sous forme de bits dans un signal magnétique 70 formé par un champ magnétique extérieur H_{Ext} qui est généré par ce dispositif de communication extérieur et modulé en amplitude de sorte qu'un bit de valeur '0' correspond à une intensité faible ou nul du champ magnétique extérieur, définissant un niveau bas de ce dernier, et qu'un bit de valeur '1' correspond à une intensité relativement forte du champ magnétique extérieur et définissant un niveau haut de ce dernier. Les moyens de communication de la pièce d'horlogerie sont agencés de manière à pouvoir décoder les données codées contenues dans le signal magnétique.

Selon l'invention, les moyens de communication sont agencés de manière à pouvoir générer des impulsions électriques de détection 82 (nommées aussi 'impulsions de détection') qui sont fournies à la bobine 18 avec une fréquence d'impulsion correspondant sensiblement à une fréquence de codage du signal magnétique modulé. A cet effet, dans le mode de réalisation principal, les moyens de communication comprennent un circuit de mesure, agencé pour pouvoir mesurer au moins un paramètre de chaque impulsion électrique de détection d'une pluralité d'impulsions de détection générées par les moyens de communication lors d'une réception desdites données codées, et un circuit de traitement dudit au moins un paramètre mesuré pour chaque impulsion de détection de ladite pluralité d'impulsions de détection. Ledit au moins un paramètre est sélectionné et le circuit de traitement est agencé de manière à permettre au circuit de traitement de déterminer le niveau, bas ou haut, du champ magnétique extérieur H_{Ext} lors d'une impulsion de détection en fonction dudit au moins un paramètre mesuré pour cette impulsion de détection, de sorte à permettre au circuit de traitement de déterminer les valeurs des bits des données codées contenues dans ledit signal magnétique modulé en amplitude. Ledit au moins un paramètre mesuré consiste en un temps de montée T_{M} du courant électrique I_{B}(t) dans la bobine 18, suite au déclenchement de l'impulsion de détection considérée, à un courant de référence I_{Ref} donné. Le courant de référence I_{Ref} est sélectionné de sorte à permettre au circuit de traitement de déterminer ledit niveau, bas ou haut, du champ magnétique extérieur H_{Ext}.

Selon une variante préférée, les moyens de communication sont agencés de manière à générer les impulsions électriques de détection dans la bobine en contre-phase relativement à une position de repos dans laquelle se trouve le rotor lors de la génération de ces impulsions électriques de détection. Par 'contre-phase', on comprend que les impulsions électriques de détection sont générées de sorte qu'un flux magnétique de bobine F_{B} résultant, se propageant dans le stator 4, présente dans les deux isthmes 12a et 12b du stator un sens contraire au sens d'un flux magnétique d'aimant F_{A} généré par l'aimant permanent 6 du rotor 3 dans ladite position de repos et traversant ces deux isthmes. Cette variante présente un avantage considérable par le fait que l'utilisation de la bobine 18 du moteur 2 pour une communication avec le dispositif de communication extérieur 100 ne risque pas d'engendrer des pas du moteur, car des impulsions électriques fournies à la bobine en contre-phase ne peuvent pas être des impulsions motrices, ces dernières étant toujours en phase. Il n'est donc pas nécessaire de prévoir des conditions particulières pour les impulsions de détection, notamment une durée maximale prévue de sorte que l'énergie ainsi fournie ne suffisse pas pour faire avancer d'un pas le moteur 2.

Le circuit électronique de commande 20, associé au moteur 2 pour gérer notamment l'entraînement de ce moteur pas-à-pas, comprend des moyens de détermination de la position du rotor au repos, parmi les première et seconde positions de repos, et un générateur 22 d'impulsions électriques associé à une source d'alimentation électrique et agencé pour pouvoir fournir sélectivement à la bobine des impulsions électriques positives +I_{B}(t) et des impulsions électriques négatives -I_{B}(t), notamment sous une tension Vs entre environ 1 V et 3 V. Le générateur 22 est agencé pour pouvoir fournir des impulsions électriques d'entraînement en rotation du rotor (impulsions motrices), ainsi que des impulsions électriques de détection (impulsions de détection), prévues pour la détection d'un champ magnétique extérieur H_{Ext}, comme ceci sera exposé plus en détails par la suite. Un circuit de gestion 38 gère notamment la génération des impulsions électriques fournies à la bobine. On notera que des impulsions électriques motrices peuvent aussi former conjointement des impulsions électriques de détection. Sans autre qualificatif associé au terme 'impulsion électrique', on comprend dans le présent texte des impulsions électriques de détection (impulsions de détection). Les moyens de détermination de la position de repos du rotor, positive ou négative, sont connus de la personne du métier et généralement prévus dans les circuits de commande des moteurs horlogers pas-à-pas. Le circuit électronique de commande 20 comprend une mémoire ou un registre dans lequel est enregistré une information relative à la polarité (positive ou négative) des impulsions motrices. En effet, un tel circuit électronique de commande engendre des impulsions motrices ayant chacune une polarité déterminée, généralement des polarités alternées. Suite à une impulsion motrice ayant une polarité déterminée, l'aimant permanent et donc le rotor se trouvent dans une position de repos déterminée, dont la polarité (positive ou négative) est opposée à la polarité de cette impulsion motrice. La mémoire ou le registre donne une information sur la polarité de la dernière impulsion motrice engendrée ou de la prochaine impulsion motrice, la variante implémentée étant prédéfinie et donc connue. Dans les deux cas, cette information permet de déterminer, en fonctionnement normal du moteur pas-à-pas, la position actuelle du rotor parmi les deux positions de repos de ce rotor. L'information relative à la polarité de la dernière ou prochaine impulsion motrice enregistrée dans une mémoire ou un registre du circuit de commande et un circuit logique ou un algorithme d'accès à cette mémoire ou ce registre pour pouvoir lire l'information considérée, et éventuellement la stocker temporairement dans le circuit de traitement, forment des moyens de détermination de la position du rotor.

Le circuit électronique de commande 20 comprend en outre un circuit 24 de détection d'un champ magnétique extérieur H_{Ext} associé au circuit de gestion 38 et formé par :
- un circuit 26 de mesure de l'intensité I_{B}(t) du courant électrique circulant dans la bobine 18 ;
- un circuit 28 de comparaison de l'intensité I_{B}(t) du courant électrique mesuré avec un courant de référence I_{Ref} ;
- un circuit 32 de mesure du temps permettant de mesurer un temps de montée T_{M}, entre le déclenchement de chacune des impulsions électriques de détection et l'instant suivant où l'intensité I_{B}(t) du courant électrique circulant dans la bobine atteint le courant de référence I_{Ref} ; et
- un circuit 36 de traitement du temps de montée T_{M} qui est agencé pour pouvoir déterminer si le temps de montée T_{M} mesuré révèle la présence, lors de l'impulsion électrique de détection considérée, d'un champ magnétique extérieur H_{Ext} d'une certaine intensité, indiquant un niveau haut dans le signal magnétique modulé, qui traverse les isthmes 12a et 12b sensiblement selon la troisième direction 40 (ceci découlant de la configuration des isthmes qui définissent deux rétrécissements pour le flux magnétique dans le stator, lesquels sont tangentiels à l'ouverture 8 globalement circulaire du stator) et avec un sens déterminé, ou l'absence d'un tel champ magnétique extérieur indiquant un niveau bas dans ledit signal magnétique modulé fourni par le dispositif de communication extérieur.

Le circuit de comparaison 28 comprend un comparateur 29 qui reçoit en entrée, suite au déclenchement d'une impulsion électrique de détection, l'intensité I_{B}(t) du courant électrique dans la bobine, laquelle est fournie par le circuit de mesure 26, et le courant de référence I_{Ref}, fourni par une mémoire 30, et qui fournit en sortie un signal de comparaison Sc indiquant si l'intensité I_{B}(t) est supérieure à la valeur de référence I_{Ref}. Le circuit de détection 24 comprend une base de temps 34 qui fournit un signal de cadencement relativement élevé, notamment environ égal ou supérieur à 500 kHz, pour d'une part permettre de suivre en temps quasi réel l'intensité I_{B}(t) du courant électrique mesuré et, d'autre part, de déterminer précisément le temps de montée T_{M} par le circuit de mesure 32 (compteur temporel 32).

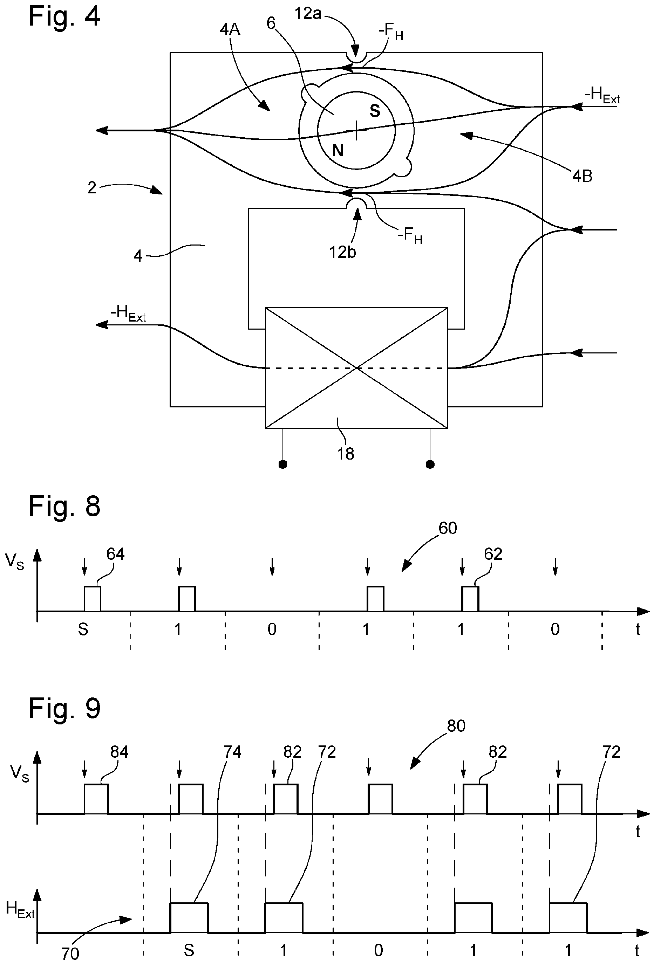

La Figure 4 représente un champ magnétique extérieur H_{Ext} qui se propage dans le plan général du stator selon la direction 40, c'est-à-dire selon une direction orthogonale à la direction 14 d'alignement des deux isthmes 12a et 12b, dans un sens négatif, générant un flux magnétique -F_{H} dans les deux isthmes. A remarquer que l'important pour la détection du champ magnétique extérieur H_{Ext} par le circuit de détection 24 via une impulsion de détection, c'est le flux magnétique F_{H}, nommé 'flux magnétique extérieur', qui passe dans les deux isthmes 12a et 12b, à savoir qui traverse ces deux isthmes entre deux parties polaires 4A et 4B du stator 4. L'intensité du champ magnétique extérieur qui est considéré dans le mode de réalisation décrit ici est de l'ordre 1'000 A/m, inférieur à environ 2'000 A/m. Toutefois, le procédé de communication selon l'invention n'est pas limité à des champs magnétiques extérieurs inférieurs à cette valeur de 2'000 A/m. Néanmoins, le champ magnétique extérieur prévu pour la communication entre la pièce d'horlogerie 50 et le dispositif de communication extérieur 100 n'est pas trop intense.

Le dispositif de communication extérieur 100 comprend :
- au moins une bobine 102 formant antenne d'émission et de réception,
- un circuit de commutation 106,
- un circuit 110 récepteur de premiers signaux électriques provenant de l'antenne 102 en réponse à la réception par cette antenne de premiers signaux magnétiques transmis par la pièce d'horlogerie 50, ce circuit récepteur étant formé par un convertisseur analogique en digital (`ADC' - 'Analog-to-Digital Converter'),
- un générateur 114 de deuxièmes signaux électriques formé par un convertisseur digital en analogique (`DAC' - 'Digital-to-Analog Converter'), ces deuxièmes signaux électriques étant fournis à l'antenne 102 pour engendrer des deuxièmes signaux magnétiques transmis par le dispositif de communication extérieur, et
- un microprocesseur 118 capable de gérer la réception des premiers signaux magnétiques et la transmission des deuxièmes signaux magnétiques.

Comme enseigné en détails dans la demande de brevet européen No 22214282 (EP 20220214282), au nom du présent Déposant, dont le contenu est incorporé par référence à la présente description, on constate qu'il y a un changement dans l'évolution du courant électrique I_{B}(t) circulant dans la bobine 18, suite au déclenchement d'une impulsion électrique fournie à cette bobine, en présence d'un flux magnétique extérieur F_{H} relativement fort traversant les deux isthmes du stator 4 et ayant un sens opposé au flux magnétique F_{A} généré par l'aimant permanent 6 du rotor 3, donc lorsque le champ magnétique extérieur est positif et l'aimant permanent / le rotor est dans la position de repos négative ou lorsque le champ magnétique extérieur est négatif et l'aimant permanent / le rotor est dans la position de repos positive. Plus précisément, lorsque l'aimant permanent du rotor est en phase avec l'impulsion électrique de détection (cas correspondant à un flux d'aimant F_{A} de même sens / signe que le flux magnétique F_{B} engendré par la bobine), l'intensité I_{B}(t) du courant électrique augmente rapidement sans champ magnétique extérieur H_{Ext} mais elle augmente lentement en présence d'un champ magnétique extérieur engendrant un flux magnétique extérieur F_{H} relativement fort et de sens / signe opposé à celui de l'aimant du rotor. On a donc un temps de montée T_{M} pour le courant électrique I_{B}(t) qui devient long en présence d'un champ magnétique extérieur H_{Ext} relativement fort avec les conditions susmentionnées, car la montée du courant électrique I_{B}(t) dans ces conditions passe de 'rapide' à `lente'. Au contraire, lorsque l'aimant permanent du rotor est en contre-phase avec l'impulsion électrique de détection (cas correspondant à un flux d'aimant F_{A} de sens/signe opposé à celui du flux magnétique F_{B} engendré par la bobine), l'intensité I_{B}(t) du courant électrique augmente lentement sans champ magnétique extérieur H_{Ext} mais elle augmente rapidement en présence d'un champ magnétique extérieur engendrant un flux magnétique extérieur F_{H} relativement fort et de sens / signe opposé à celui de l'aimant du rotor. On a donc un temps de montée T_{M} pour le courant électrique I_{B}(t) qui devient court en présence d'un champ magnétique extérieur H_{EXT} relativement fort dans les conditions susmentionnées, car la montée du courant électrique I_{B}(t) dans ces conditions passe de 'lente' à 'rapide'. Le procédé de détection d'un champ magnétique extérieur intervenant dans le procédé de communication, selon un mode de mise en oeuvre général de l'invention, repose sur ce phénomène physique et sur une mesure du temps de montée T_{M} en connaissance de la position de repos du rotor (information nécessaire pour fournir des impulsions électriques motrices) au moment du déclenchement d'une impulsion électrique de détection dont on connaît évidemment la polarité (à savoir s'il s'agit d'une impulsion électrique positive ou négative, cette information étant donnée lors de la génération de toute impulsion électrique).

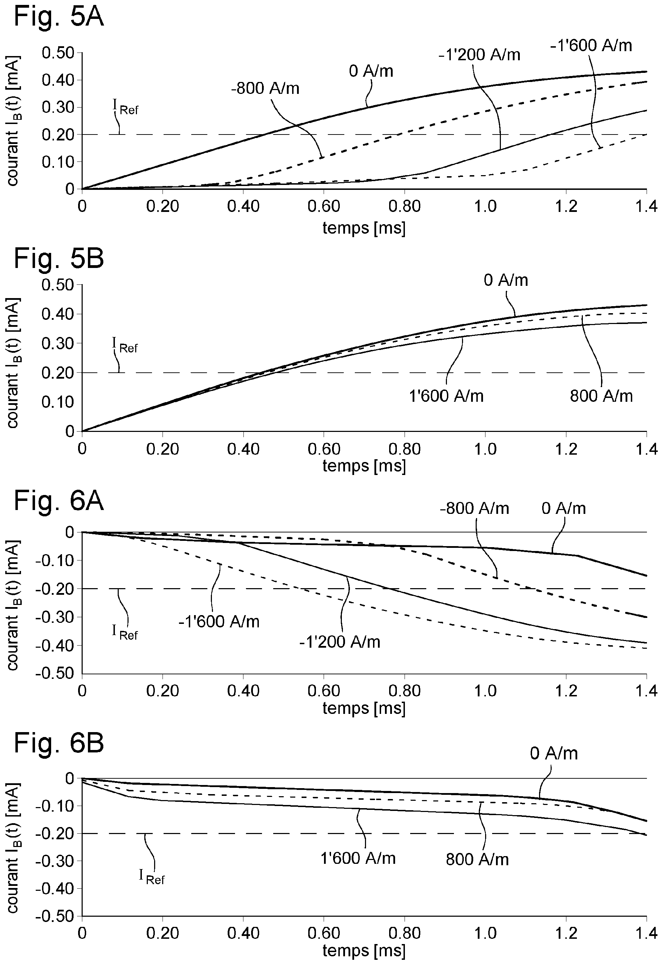

Aux Figures 5A et 5B sont données des courbes de l'évolution temporelle du courant électrique I_{B}(t) dans la bobine avec l'aimant permanent dans sa position de repos positive pour des impulsions électriques en phase, donc positives, et un champ magnétique extérieur respectivement négatif et positif pour diverses intensités du champ magnétique extérieur. On observe à la Fig. 5A le phénomène physique que nous venons d'exposer pour un champ magnétique extérieur négatif. Le courant de référence I_{Ref} est sélectionné de sorte à permettre au circuit de traitement de différencier aisément le temps de montée pour diverses intensités du champ magnétique extérieur, notamment entre une intensité faible et une intensité forte. Dans l'exemple de la Figure 5A, un courant de référence est avantageusement sélectionné entre 0.15 mA et 0.25 mA. La Fig. 5B montre qu'il n'y a quasi pas de variation dans l'évolution temporelle du courant électrique dans la bobine, qui demeure rapide, lorsque le champ magnétique extérieur a un même sens / signe que la position de repos de l'aimant permanent, c'est-à-dire lorsque le flux magnétique extérieur F_{H} et le flux magnétique F_{A} de l'aimant dans les deux isthmes ont un même sens, et donc un même signe. Aux Figures 6A et 6B sont données des courbes de l'évolution temporelle du courant électrique I_{B}(t) dans la bobine avec l'aimant permanent aussi dans sa position de repos positive mais pour des impulsions électriques en contre-phase, donc négatives, et un champ magnétique extérieur respectivement négatif et positif pour diverses intensités du champ magnétique extérieur. On observe à la Fig. 6A le phénomène physique que nous venons d'exposer. Le courant de référence I_{Ref} est sélectionné de sorte à permettre au circuit de traitement de différencier aisément le temps de montée pour diverses intensités du champ magnétique extérieur, notamment entre une intensité faible et une intensité forte. Dans l'exemple de la Figure 6A, un courant de référence est avantageusement sélectionné entre - 0.15 mA et - 0.25 mA. Pour couvrir les deux polarités possibles du courant électrique dans la bobine, on peut comparer la valeur absolue du courant électrique à un courant de référence positif, par exemple 0.20 mA. La Fig. 6B montre à nouveau qu'il y a peu de variation dans l'évolution temporelle du courant électrique I_{B}(t) dans la bobine, qui demeure lente, lorsque le champ magnétique extérieur a un même signe que la position de repos de l'aimant permanent.

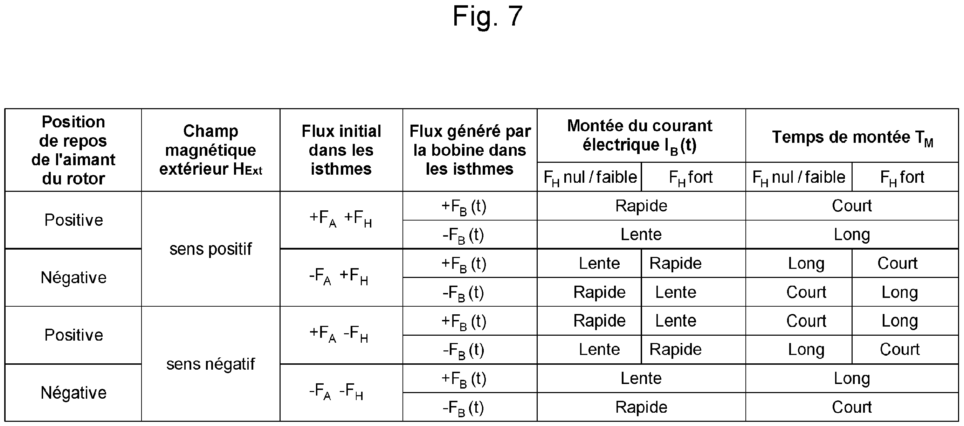

Le tableau de la Figure 7 récapitule les observations effectuées et constations particulières en lien avec la montée du courant électrique I_{B}(t) dans la bobine 18 et le temps de montée T_{M} au courant de référence I_{Ref} à l'enclenchement d'une impulsion électrique de détection 82.

Une constatation importante se dégage de l'enseignement donné ci-avant, à savoir que, lorsque le rotor 3 / l'aimant permanent 6 est dans la position de repos négative, seul un champ magnétique extérieur engendrant un flux magnétique extérieur F_{H} positif (+F_{H}), dans une plage de valeurs utile de son intensité, peut être détecté aisément sur la base du temps de montée T_{M}, et que, lorsque le rotor / l'aimant permanent est dans la position de repos positive, seul un champ magnétique extérieur engendrant un flux magnétique extérieur F_{H} négatif (-F_{H}), dans une plage de valeurs utile de son intensité, peut être détecté aisément sur la base du temps de montée T_{M}.

La présente invention exploite l'enseignement remarquable donné ci-avant pour le procédé de communication, selon un mode de mise en oeuvre général de l'invention, entre un dispositif de communication extérieur 100 et la pièce d'horlogerie 50 selon l'invention, ce mode de mise en oeuvre général du procédé de communication étant décrit ci-après en référence aux Figures 8 et 9.

A la Figure 8 est représentée la génération d'un premier signal magnétique par la pièce d'horlogerie 50 alors dans un mode d'émission lors du procédé de communication, ce premier signal magnétique étant destiné au dispositif de communication extérieur 100. La génération du premier signal magnétique est obtenue par la fourniture à la bobine 18 du moteur 2 d'une série d'impulsions électriques de codage 62 définissant des bits de valeur `1' dans une séquence de bits 60 présentant une première fréquence de codage, dont l'inverse détermine une première période de codage (indiquée à la Fig. 8 par des traits interrompus verticaux). Une période de codage sans impulsion électrique de codage correspond à un bit '0' dans la séquence 60, alors qu'une impulsion électrique de codage 62 intervenant dans une période de codage, en phase avec au moins une impulsion électrique préliminaire 64 (c'est-à-dire dont le flanc montant est séparé temporellement du flanc montant de l'impulsion électrique préliminaire 64 par un nombre entier de périodes de codage), correspond à un bit '1'. Ainsi, les moyens de communication sont agencés pour permettre à la pièce d'horlogerie 50 de transmettre un message codé sous forme de bits, pour sa réception par le dispositif de communication extérieur, en générant une pluralité d'impulsions électriques de codage fournies à la bobine 18, laquelle génère une pluralité d'impulsions magnétiques de codage correspondantes qui forme le premier signal magnétique dont le champ magnétique H_{B} est couplé avec la bobine 102, en mode de réception, du dispositif de communication extérieur 100. Les moyens de communication de la pièce d'horlogerie sont donc agencés de manière à pouvoir générer une impulsion électrique de codage pour chaque bit de valeur '1' dans le message codé, lequel est codé à une première fréquence de codage, et à ne pas générer d'impulsion électrique de codage pour un bit de valeur '0' dans le message codé.

L'impulsion électrique préliminaire 64 sert à synchroniser la pièce d'horlogerie 50 et le dispositif de communication extérieur 100 pour la séquence de bits 60 qui suit, ce dispositif recevant une impulsion magnétique préliminaire correspondante générée par l'impulsion électrique préliminaire 64 circulant dans la bobine 18 et dont il détermine l'instant d'un flanc montant ou alternativement une valeur temporelle située sensiblement au milieu de cette impulsion magnétique préliminaire. Dans une première variante, le dispositif 100 a en mémoire la première fréquence de codage définie par le protocole de communication associé au procédé de communication. Dans une deuxième variante, le dispositif 100 reçoit plusieurs impulsions magnétiques préliminaires à la première fréquence de codage et il détermine lui-même la valeur de celle-ci pour ensuite pouvoir décoder correctement le message codé reçu. Lorsqu'il y a une seule impulsion électrique préliminaire 64 devant une séquence de bits du message codé, il s'agit généralement d'une impulsion de resynchronisation intervenant après un certain intervalle de temps sans émission d'impulsions magnétiques de codage, cette impulsion de resynchronisation servant également de bit initial ou bit de commencement (`Start bit' S) pour chaque séquence de données incluse dans le message codé. En effet, toute séquence de données est précédée par un bit initial S indiquant au dispositif récepteur le début de cette séquence de données. Un tel bit initial S est notamment indispensable lorsque le premier bit d'une séquence de données a la valeur '0' et le premier signal magnétique, reçu par le dispositif de communication extérieur 100, présente donc une absence d'impulsion magnétique de codage dans la première période de cette séquence de données. Ainsi, le dispositif de communication extérieur peut détecter, à une première fréquence de codage donnée ou détectée, la succession de bits dudit message codé, soit '1' lors de la détection d'une des impulsions magnétiques de détection 62, soit '0' en l'absence d'impulsion magnétique dans une période de codage.

Le procédé de communication selon l'invention est remarquable pour la réception par la pièce d'horlogerie 50 de données codées dans un deuxième signal magnétique qui est émis par le dispositif de communication extérieur. La méthode de réception, par la pièce d'horlogerie, du deuxième signal magnétique transmis par le dispositif de communication 100 est décrite en référence à la Figure 9. Le graphe supérieur de la Figure 9 représente un signal périodique de détection 80 qui comprend des impulsions électriques de détection 82 générées à une fréquence d'impulsion déterminée et fournies à la bobine 18 du moteur 2. Le graphe inférieur de la Figure 9 représente schématiquement le deuxième signal magnétique 70 qui est modulé en amplitude en fonction de données codées sous forme de bits contenues dans ce deuxième signal magnétique. Le deuxième signal magnétique 70 présente ainsi des impulsions magnétiques de codage 72 qui correspondent à des bits de valeur '1' dans lesdites données codées, le bit de valeur'1' précédant une séquence de données étant un bit initial ou bit de commencement S.

Selon le mode de mise en oeuvre général, le procédé de communication pour la réception du deuxième signal magnétique par la pièce d'horlogerie selon l'invention comprend les étapes suivantes :
- Placement de la pièce d'horlogerie relativement au dispositif de communication extérieur 100 de sorte qu'un champ magnétique extérieur H_{Ext} émis par ce dispositif, pour former le deuxième signal magnétique, se propage dans le stator 4 du moteur pas-à-pas principalement selon une direction 40 qui est parallèle à un plan général du stator et orthogonale à une direction 14 d'alignement des deux isthmes 12a et 12b de ce stator ;
- Réception par les moyens de communication de la pièce d'horlogerie d'un signal d'activation d'un mode de communication, ce signal d'activation étant en particulier fourni par des moyens d'activation d'un mode de communication dont est muni la pièce d'horlogerie et qui sont actionnés par une personne ou par des moyens d'actionnement d'un dispositif supportant cette pièce d'horlogerie ; ensuite
- Génération d'au moins une impulsion électrique préliminaire 84 fournie à la bobine 18 du moteur pas-à-pas ; et réception par le dispositif de communication extérieur d'au moins une impulsion magnétique de synchronisation engendrée par ladite au moins une impulsion électrique préliminaire circulant dans la bobine et donc émise par cette bobine en réponse à ladite au moins une impulsion électrique préliminaire ;
- Détection par le dispositif de communication extérieur d'une position temporelle spécifique dans au moins une impulsion magnétique de synchronisation de ladite au moins une impulsion magnétique de synchronisation, notamment d'un flanc montant ou d'une valeur temporelle milieu d'au moins une des impulsions magnétiques de synchronisation ; ensuite
- Génération d'impulsions électriques de détection 82 fournies à la bobine avec une fréquence d'impulsion donnée et en phase avec ladite au moins une impulsion de synchronisation ; et émission simultanée du deuxième signal magnétique 70 par le dispositif de communication extérieur 100, les données codées dans ce deuxième signal magnétique présentant une deuxième fréquence de codage sensiblement égale à la fréquence d'impulsion et cette émission du deuxième signal magnétique étant effectuée de manière que les niveaux haut et bas du champ magnétique extérieur, correspondant aux bits `1' et '0' des données codées, sont synchronisés avec les impulsions électriques de détection 82 pour que chaque niveau haut du champ magnétique extérieur H_{Ext}, définissant une impulsion magnétique de codage 72 et correspondant à un bit '1', soit présent dans le stator 4 du moteur pas-à-pas 2 durant une impulsion de détection correspondante 82 et que chaque niveau bas du champ magnétique extérieur, correspondant à un bit '0', intervienne durant une impulsion de détection correspondante 82 ;
- Mesure, par le circuit de détection 24 des moyens de communication de la pièce d'horlogerie, du temps de montée T_{M} du courant électrique I_{B}(t) dans la bobine 18 pour chacune des impulsions électriques de détection 82 intervenant lors de la réception desdites données codées dans le deuxième signal magnétique 70 ;
- Traitement, par le circuit de traitement 36 du circuit de détection, dudit temps de montée mesuré pour chaque impulsion électrique de détection 82 de manière à déterminer, en fonction de ce temps de montée mesuré, si cette impulsion électrique de détection est intervenue lors d'un niveau haut ou bas du champ magnétique extérieur et ainsi de déterminer la valeur de bit correspondante, soit '1' ou '0', dans le deuxième signal magnétique 70, de sorte à obtenir une séquence de bits correspondant aux données codées dans ce deuxième signal magnétique.

Le temps de montée T_{M} du courant électrique I_{B}(t) dans la bobine 18, suite au déclenchement de l'impulsion électrique de détection 82 considérée, à un courant de référence I_{Ref} donné est un paramètre physique remarquable sélectionné dans le cadre de la présente invention.

Le procédé de communication comprend, dans un mode de réception du deuxième signal magnétique 70 par la pièce d'horlogerie 50, les étapes suivantes :
- Sélection d'une position de repos, parmi la position de repos positive et la position de repos négative, à occuper par le rotor 3 du moteur pas-à-pas 2 lors de la génération des impulsions électriques de détection 82 et d'un sens, parmi un sens positif et un sens négatif, pour le champ magnétique extérieur H_{Ext} lors de l'émission du deuxième signal magnétique 70 contenant les données codées, de sorte que le champ magnétique extérieur H_{Ext} présente un sens négatif et le rotor soit dans la position de repos positive ou que le champ magnétique extérieur présente un sens positif et le rotor soit dans la position de repos négative ;
- Si la polarité d'une impulsion électrique de détection 82 est en phase avec la position de repos du rotor, à savoir si le flux magnétique F_{B} généré par la bobine dans les deux isthmes du stator présente un même sens que le flux d'aimant F_{A} dans ces deux isthmes, déterminer si le temps de montée T_{M} est supérieur à une première durée de référence, et conclure à un niveau haut du champ magnétique et donc à un bit '1' dans les données codées si tel est le cas et à un niveau bas du champ magnétique et donc à un bit '0' dans les données codées si tel n'est pas le cas ;
- Si la polarité de l'impulsion électrique de détection 82 est en contre-phase avec la position de repos du rotor, à savoir si le flux magnétique F_{B} généré par la bobine dans les deux isthmes du stator présente un sens opposé à celui du flux d'aimant F_{A} dans ces deux isthmes, déterminer si le temps de montée T_{M} est inférieur à une deuxième durée de référence, et conclure à un niveau haut du champ magnétique et donc à un bit '1' dans les données codées si tel est le cas et à un niveau bas du champ magnétique et donc à un bit '0' dans les données codées si tel n'est pas le cas.

Dans une variante avantageuse, la première durée de référence est égale à la deuxième durée de référence.

Dans une variante préférée, les impulsions électriques de détection 82 sont générées en contre-phase avec la position de repos du rotor, de sorte que ces impulsions électriques de détection ne sont pas motrices. Leur durée est prévue en général entre 1 ms et 2 ms. Dans une variante avantageuse, ladite au moins une impulsion électrique préliminaire est générée en contre-phase avec la position de repos du rotor, de sorte que ladite au moins une impulsion électrique préliminaire n'est pas motrice.

Selon un premier mode de réalisation particulier de la pièce d'horlogerie 50, cette pièce d'horlogerie comprend une mémoire dans laquelle peut être enregistrée une information relative à une position de repos donnée, parmi les positions de repos positive et négative, dans laquelle il est prévu que soit le rotor 3 lors d'une réception par la pièce d'horlogerie du deuxième signal magnétique 70 émis par le dispositif de communication extérieur 100, alors que la pièce d'horlogerie est momentanément placée dans une position définie relativement à ce dispositif de communication extérieur de sorte que le champ magnétique extérieur puisse se propager dans un plan général du stator avec une direction générale 40 qui est sensiblement orthogonale à une direction 14 d'alignement des deux isthmes du stator 4. Les moyens de communication de la pièce d'horlogerie sont agencés de manière que, suite à la réception d'un signal d'activation d'un mode de communication, le rotor du moteur pas-à-pas 2 soit arrêté ou mis dans ladite position de repos donnée lors d'une communication en réception, ou de manière à gérer la réception du deuxième signal magnétique de sorte que les moyens de communication ne déterminent des valeurs de bits desdites données codées que lorsque le rotor se trouve dans ladite position de repos donnée.

Selon une première variante de mise en oeuvre du procédé de communication entre la pièce d'horlogerie 50, selon le premier mode de réalisation particulier exposé ci-avant, et le dispositif de communication extérieur 100, ladite étape de sélection est prédéfinie dans un protocole de communication et l'information relative à la position de repos donnée, parmi les positions de repos positive et négative, dans laquelle il est prévu que soit le rotor lors d'une communication en réception de la pièce d'horlogerie avec le dispositif de communication extérieur est enregistrée dans la mémoire de la pièce d'horlogerie. Suite à la réception du signal d'activation d'un mode de communication, le rotor du moteur pas-à-pas est arrêté ou mis dans ladite position de repos donnée au moins pour la communication en réception de la pièce d'horlogerie avec le dispositif de communication extérieur, ou la réception du deuxième signal magnétique 70 est gérée de sorte que les moyens de communication ne déterminent des valeurs de bits desdites données codées dans ce deuxième signal magnétique que lorsque le rotor 3 se trouve dans ladite position de repos donnée.

Selon un deuxième mode de réalisation particulier de la pièce d'horlogerie 50, les moyens de communication de cette pièce d'horlogerie sont agencés de manière à pouvoir détecter, suite à la réception d'un signal d'activation d'un mode de communication, le sens d'un champ magnétique extérieur H_{Ext} lorsqu'il se propage dans un plan général du stator avec une direction générale qui est sensiblement orthogonale à une direction d'alignement des deux isthmes du stator, et de manière à pouvoir ensuite arrêter ou mettre le rotor dans une position de repos déterminée par le sens détecté dudit champ magnétique extérieur, pour satisfaire à ladite condition donnée pour ce sens en fonction de la position de repos du rotor, pour recevoir lesdites données codées ou gérer la réception dudit deuxième signal magnétique 70 de sorte que les moyens de communication ne déterminent des valeurs de bits desdites données codées que lorsque le rotor se trouve dans la position de repos déterminée.

Selon une deuxième variante de mise en oeuvre du procédé de communication entre la pièce d'horlogerie 50, selon le deuxième mode de réalisation particulier exposé ci-avant, et le dispositif de communication extérieur 100, les moyens de communication de la pièce d'horlogerie effectuent, lors de ladite étape de sélection, les étapes suivantes :
- Générer au moins une impulsion électrique dans la bobine 18 alors que le rotor 3 est situé dans la position de repos positive ou dans la position de repos négative ;
- si la polarité de l'impulsion électrique est en phase avec la position de repos du rotor, déterminer si ledit temps de montée T_{M} pour cette impulsion électrique est supérieur à la première durée de référence, et sélectionner, si tel est le cas, la position de repos dans laquelle est situé le rotor à l'étape précédente ;
- si la polarité de l'impulsion électrique est en contre-phase avec la position de repos du rotor, déterminer si ledit temps de montée T_{M} pour cette impulsion électrique est inférieur à la deuxième durée de référence, et sélectionner, si tel est le cas, la position de repos dans laquelle est situé le rotor lors de la génération de ladite au moins une impulsion électrique.

Selon une première alternative, si la condition de la deuxième étape ou la condition de la troisième étape n'est pas remplie dans la deuxième variante de mise en oeuvre, il est prévu de sélectionner la position de repos dans laquelle n'est pas situé le rotor lors de ladite génération de ladite au moins une impulsion électrique.

Selon une deuxième alternative, si la condition de la deuxième étape ou la condition de la troisième étape n'est pas remplie dans la deuxième variante de mise en oeuvre, il est prévu d'effectuer une impulsion électrique motrice de manière à faire avancer d'un pas le rotor et positionner ainsi ce rotor respectivement dans la position de repos négative ou dans la position de repos positive ; et ensuite de répéter les étapes de la deuxième variante de mise en oeuvre de sorte à déterminer si la condition de la deuxième étape ou la condition de la troisième étape est alors remplie, pour s'assurer que le dispositif de communication extérieur 100 a commencé d'émettre un champ magnétique extérieur pouvant être détecté par les moyens de communication de la pièce d'horlogerie, et ensuite, si tel est le cas, de commencer l'étape de génération d'impulsions électriques de détection 82.

Dans une variante avantageuse du mode de mise en oeuvre préféré décrit précédemment, lors de l'étape de génération d'au moins une impulsion électrique préliminaire 84 dans la bobine 18 du moteur pas-à-pas 2, le dispositif de communication extérieur 100 détermine la polarité, positive ou négative, de ladite au moins une impulsion électrique préliminaire. Dans ce cas, il est prévu que le protocole de communication établit si ladite au moins une impulsion électrique préliminaire 84 est générée en phase ou en contre-phase avec la position de repos du rotor et si les impulsions électriques de détection 82 sont prévues avec le rotor dans la même position de repos que lors de l'émission de ladite au moins une impulsion électrique préliminaire ou non, de sorte que le dispositif de communication extérieur 100 détermine, lors de ladite étape de sélection, le sens à donner au champ magnétique extérieur du deuxième signal magnétique pour satisfaire à ladite condition donnée pour ce sens en fonction de la position de repos du rotor.

Dans une variante particulière, le protocole de communication définit la deuxième fréquence de codage et la fréquence d'impulsion en leur attribuant une même valeur. Ces fréquences sont par exemple prévues égales à 32 Hz ou 64 Hz, éventuellement à 128 Hz.

Dans un mode de mise en oeuvre évolué, lors de ladite étape de génération d'au moins une impulsion électrique préliminaire 84, les moyens de communication de la pièce d'horlogerie 50 génèrent une pluralité d'impulsions électriques préliminaires qui sont fournies à la bobine à ladite fréquence d'impulsion et le dispositif de communication extérieur 100 reçoit respectivement une pluralité d'impulsions magnétiques engendrées par ladite pluralité d'impulsions électriques préliminaires circulant dans la bobine. Le dispositif de communication extérieur détecte, sur la base de la réception de ladite pluralité d'impulsions magnétiques, la fréquence d'impulsion. Ensuite, le dispositif de communication extérieur 100 sélectionne une deuxième fréquence de codage égale à la fréquence d'impulsions détectée.

Dans un autre mode de mise en oeuvre du procédé de communication selon l'invention, lors de ladite étape de sélection, le dispositif de communication extérieur 100 détermine si le rotor 3 est dans la position de repos positive ou dans la position de repos négative en détectant un flux magnétique de l'aimant permanent 6 fuyant hors de la pièce d'horlogerie.

## Revendications

1. Pièce d'horlogerie (50) comprenant un mouvement électromécanique muni d'un moteur pas-à-pas (2) et d'un circuit de commande (20) du moteur pas-à-pas, le moteur pas-à-pas comprenant un stator (4) définissant deux isthmes (12a, 12b) en périphérie d'une ouverture (8) de ce stator, un rotor (3) muni d'un aimant permanent (6) situé dans l'ouverture, et une bobine (18) ; le circuit de commande (20) étant agencé de manière à pouvoir générer des impulsions électriques motrices pour alimenter la bobine et entraîner en rotation le rotor ; la pièce d'horlogerie comprenant des moyens de communication sans contact avec un dispositif de communication extérieur, ces moyens de communication comprenant une antenne formée par ladite bobine du moteur et étant agencés de manière à pouvoir recevoir du dispositif de communication extérieur des données codées sous forme de bits dans un signal magnétique (70) formé par un champ magnétique extérieur (H_{Ext}) généré par ce dispositif de communication extérieur et modulé en amplitude de sorte qu'un bit de valeur '0' correspond à une intensité faible ou nul du champ magnétique extérieur, définissant un niveau bas de ce dernier, et qu'un bit de valeur '1' correspond à une intensité relativement forte du champ magnétique extérieur et définissant un niveau haut de ce dernier, les moyens de communication étant agencés de manière à pouvoir décoder les données codées qui sont contenues dans ledit signal magnétique ; ledit aimant permanent (6) étant bipolaire et présentant un axe d'aimantation perpendiculaire à un axe de rotation (7) du rotor, les deux isthmes (12a, 12b) du stator (4) étant agencés selon une première direction (14) perpendiculaire à l'axe de rotation, le stator étant agencé de manière que le rotor présente deux positions de repos dans lesquelles l'aimant permanent est orienté selon une deuxième direction (16), décalée angulairement relativement à la première direction (14), respectivement dans les deux sens, l'aimant permanent générant dans les deux positions de repos un premier flux magnétique (F_{A}) traversant les deux isthmes respectivement dans les deux sens, une première position de repos correspondant à un sens positif et la seconde position de repos correspondant à un sens négatif du premier flux magnétique ; la bobine (18) étant montée sur le stator de manière à pouvoir générer, lorsqu'elle est alimentée par une impulsion électrique ayant une polarité positive ou négative, un deuxième flux magnétique (F_{B}) traversant les deux isthmes respectivement dans ledit sens positif ou ledit sens négatif ; **caractérisée en ce que** les moyens de communication sont agencés de manière à pouvoir générer des impulsions électriques de détection (82) fournies à la bobine avec une fréquence d'impulsion correspondant sensiblement à une fréquence de codage du signal magnétique ; et **en ce que** le circuit de commande (20) comprend des moyens de détermination de la position du rotor au repos, parmi lesdites première et seconde positions de repos, et un circuit (24) de détection d'un champ magnétique extérieur (H_{Ext}), formant les moyens de communication, qui comprend :
- un circuit (26) de mesure dudit courant électrique ;
- un circuit (28) de comparaison du courant électrique mesuré avec ledit courant de référence (I_{Ref}) ;
- un circuit (32) de mesure du temps agencé pour mesurer ledit temps de montée (T_{M}) entre le déclenchement d'une impulsion électrique de détection et l'instant suivant où ledit courant électrique (I_{B}(t)) circulant dans la bobine atteint ledit courant de référence ; et
- un circuit (36) de traitement du temps de montée qui est agencé pour pouvoir déterminer si le temps de montée mesuré indique un niveau haut ou bas d'un champ magnétique extérieur (H_{Ext}) traversant les deux isthmes avec un sens déterminé, alors que le rotor est dans une position de repos dans laquelle le premier flux magnétique (F_{A}) traversant les deux isthmes présente un sens opposé audit sens déterminé, lors de la génération d'une impulsion électrique de détection ayant une polarité donnée, le courant de référence (I_{Ref}) étant sélectionné de manière que le circuit de traitement peut différencier entre un niveau bas et un niveau haut dudit champ magnétique extérieur (HExt), de sorte à permettre au circuit de traitement de déterminer les valeurs des bits des données codées contenues dans le signal magnétique.

2. Pièce d'horlogerie selon la revendication 1, **caractérisée en ce que** les moyens de communication sont agencés de manière à générer les impulsions électriques de détection (82) dans la bobine en contre-phase relativement à une position de repos dans laquelle se trouve le rotor (3) lors de la génération de ces impulsions électriques de détection, lesquelles sont ainsi générées de sorte qu'un flux magnétique de bobine résultant (F_{B}), se propageant dans le stator (4), présente dans les deux isthmes du stator un sens contraire au sens d'un flux magnétique d'aimant (F_{A}) généré par l'aimant permanent (6) du rotor dans ladite position de repos et traversant ces deux isthmes.

3. Pièce d'horlogerie selon la revendication 1 ou 2, **caractérisée en ce qu'**elle comprend une mémoire dans laquelle peut être enregistrée une information relative à une position de repos donnée, parmi les première et seconde positions de repos, dans laquelle il est prévu que soit le rotor lors d'une communication en réception avec le dispositif de communication extérieur (100), alors que la pièce d'horlogerie (50) est momentanément placée dans une position définie relativement à ce dispositif de communication extérieur pour que le champ magnétique extérieur puisse se propager dans un plan général du stator (4) avec une direction générale qui est sensiblement orthogonale à une direction (14) d'alignement des deux isthmes du stator ; et **en ce que** les moyens de communication sont agencés de manière que, suite à la réception d'un signal d'activation d'un mode de communication, le rotor du moteur pas-à-pas (2) soit arrêté ou mis dans ladite position de repos donnée lors d'une communication en réception, ou de manière à gérer la réception du signal magnétique (70) de sorte que les moyens de communication ne déterminent des valeurs de bits desdites données codées dans ce signal magnétique que lorsque le rotor se trouve dans ladite position de repos donnée.

4. Pièce d'horlogerie selon une quelconque des revendications précédentes, **caractérisée en ce que** les moyens de communication sont agencés de manière à pouvoir détecter, suite à la réception d'un signal d'activation d'un mode de communication, le sens du champ magnétique extérieur (H_{Ext}) lorsqu'il se propage dans un plan général du stator avec une direction générale qui est sensiblement orthogonale à une direction d'alignement des deux isthmes du stator, et de manière à pouvoir ensuite arrêter ou mettre le rotor (3) dans une position de repos déterminée par le sens détecté du champ magnétique extérieur pour recevoir lesdites données codées ou gérer la réception dudit signal magnétique (70) de sorte que les moyens de communication ne déterminent des valeurs de bits desdites données codées que lorsque le rotor (3) se trouve dans la position de repos déterminée.

5. Pièce d'horlogerie selon une quelconque des revendications précédentes, **caractérisée en ce que** les moyens de communication sont agencés pour permettre à la pièce d'horlogerie (50) d'émettre un message codé sous forme de bits, pour sa réception par le dispositif de communication extérieur, en générant une pluralité d'impulsions électriques de codage (62) fournies à la bobine (18), laquelle émet alors une pluralité d'impulsions magnétiques de codage correspondantes ; et **en ce que** les moyens de communication sont agencés de manière à générer une impulsion électrique de codage (62) pour chaque bit de valeur '1' dans le message codé, lequel est codé à une fréquence de codage donnée, et à ne pas générer d'impulsion électrique de codage pour un bit de valeur '0' dans le message codé.

6. Procédé de communication sans contact entre une pièce d'horlogerie (50), selon une quelconque des revendications 1 à 5, et un dispositif de communication extérieur (100), ce procédé de communication comprenant, pour la réception par la pièce d'horlogerie de données codées sous forme de bits dans un signal magnétique (70) émis par le dispositif de communication extérieur, les étapes suivantes :
- Placement de la pièce d'horlogerie relativement au dispositif de communication extérieur de sorte qu'un champ magnétique extérieur (H_{Ext}) émis par ce dispositif, pour former le signal magnétique, se propage dans le stator du moteur pas-à-pas principalement selon une direction parallèle à un plan général du stator et sensiblement orthogonale à une direction (14) d'alignement des deux isthmes (12a, 12b) de ce stator ;
- Réception par les moyens de communication de la pièce d'horlogerie d'un signal d'activation d'un mode de communication ; ensuite
- Génération d'au moins une impulsion électrique préliminaire (84) fournie à la bobine (18) du moteur pas-à-pas (2) ; et réception par le dispositif de communication extérieur (100) d'au moins une impulsion magnétique de synchronisation engendrée par ladite au moins une impulsion électrique préliminaire circulant dans la bobine ;
- Détection par le dispositif de communication extérieur d'une position temporelle spécifique dans au moins une impulsion magnétique de synchronisation de ladite au moins une impulsion magnétique de synchronisation, notamment d'un flanc montant ou d'une valeur temporelle milieu d'au moins une des impulsions magnétiques de synchronisation ; ensuite
- Génération d'impulsions électriques de détection (82) fournies à la bobine avec une fréquence d'impulsion donnée et en phase avec ladite au moins une impulsion de synchronisation (84) ; et émission simultanée du signal magnétique (70) par le dispositif de communication extérieur, les données codées présentant une fréquence de codage sensiblement égale à la fréquence d'impulsion et cette émission du signal magnétique (70) étant effectuée de manière que les niveaux haut et bas du champ magnétique extérieur (H_{Ext}), correspondant aux bits `1' et '0' des données codées, sont synchronisés avec les impulsions électriques de détection (82) pour que chaque niveau haut du champ magnétique extérieur, correspondant à un bit '1', soit présent dans le stator (4) du moteur pas-à-pas durant une impulsion de détection correspondante et que chaque niveau bas du champ magnétique extérieur, correspondant à un bit '0', intervienne durant une impulsion de détection correspondante ;
- Mesure, par le circuit de détection (24) des moyens de communication de la pièce d'horlogerie (50), du temps de montée (T_{M}) pour chacune des impulsions électriques de détection (82) intervenant lors de la réception desdites données codées dans le signal magnétique (70) ;
- Traitement, par le circuit de traitement (36) desdits moyens de communication, dudit temps de montée mesuré pour chaque impulsion électrique de détection (82) de manière à déterminer, en fonction de ce temps de montée mesuré, si cette impulsion électrique de détection est intervenue lors d'un niveau haut ou bas du champ magnétique extérieur et ainsi de déterminer la valeur de bit correspondante, soit `1' ou '0', dans le signal magnétique, de sorte à obtenir une séquence de bits correspondant aux données codées dans le signal magnétique.

7. Procédé de communication selon la revendication 6, **caractérisé en ce qu'**il comprend en outre les étapes suivantes :
- Sélection d'une position de repos, parmi les première et seconde positions de repos, à occuper par le rotor (3) du moteur pas-à-pas lors de la génération des impulsions électriques de détection (82) et d'un sens, parmi un sens positif et un sens négatif, pour le champ magnétique extérieur lors de l'émission du signal magnétique (70) contenant les données codées, de sorte que le champ magnétique extérieur (H_{Ext}) présente un sens négatif et le rotor soit dans la première position de repos ou que le champ magnétique extérieur présente un sens positif et le rotor soit dans la seconde position de repos ;
- si la polarité d'une impulsion électrique de détection (82) est en phase avec la position de repos du rotor, déterminer si ledit temps de montée (T_{M}) est supérieur à une première durée de référence, et conclure à un niveau haut du champ magnétique et donc à un bit `1' dans les données codées si tel est le cas et à un niveau bas du champ magnétique et donc à un bit '0' dans les données codées si tel n'est pas le cas ;
- si la polarité de l'impulsion électrique de détection (82) est en contre-phase avec la position de repos du rotor, déterminer si ledit temps de montée (T_{M}) est inférieur à une deuxième durée de référence, et conclure à un niveau haut du champ magnétique et donc à un bit `1' dans les données codées si tel est le cas et à un niveau bas du champ magnétique et donc à un bit '0' dans les données codées si tel n'est pas le cas.

8. Procédé de communication selon la revendication 7 entre une pièce d'horlogerie selon la revendication 3 et le dispositif de communication extérieur (100), **caractérisé en ce que** l'étape de sélection est prédéfinie dans un protocole de communication et l'information relative à la position de repos donnée, parmi les première et seconde positions de repos, dans laquelle il est prévu que soit le rotor (3) lors d'une communication en réception avec le dispositif de communication extérieur est enregistrée dans la mémoire de la pièce d'horlogerie ; et **en ce que**, suite à la réception du signal d'activation d'un mode de communication, le rotor du moteur pas-à-pas est arrêté ou mis dans ladite position de repos donnée au moins pour une communication en réception avec le dispositif de communication extérieur, ou la réception de ce signal magnétique est gérée de sorte que les moyens de communication ne déterminent des valeurs de bits desdites données codées dans ledit signal magnétique (70) que lorsque le rotor se trouve dans ladite position de repos donnée.

9. Procédé de communication selon la revendication 7 entre une pièce d'horlogerie selon la revendication 4 et le dispositif de communication extérieur (100), **caractérisé en ce que**, lors de l'étape de sélection, les moyens de communication de la pièce d'horlogerie effectuent, suite à la réception d'un signal d'activation d'un mode de communication, les étapes suivantes :
- Générer au moins une impulsion électrique dans la bobine alors que le rotor est situé dans la première position de repos ou dans la seconde position de repos ;
- si la polarité de l'impulsion électrique est en phase avec la position de repos du rotor, déterminer si ledit temps de montée (T_{M}) est supérieur à la première durée de référence, et sélectionner, si tel est le cas, la position de repos dans laquelle est situé le rotor à l'étape précédente ;
- si la polarité de l'impulsion électrique est en contre-phase avec la position de repos du rotor, déterminer si ledit temps de montée (T_{M}) est inférieur à la deuxième durée de référence, et sélectionner, si tel est le cas, la position de repos dans laquelle est situé le rotor lors de la génération de ladite au moins une impulsion électrique.

10. Procédé de communication selon la revendication 9, **caractérisé en ce que**, si la condition de la deuxième étape ou la condition de la troisième étape dans la revendication 9 n'est pas remplie, sélectionner la position de repos dans laquelle n'est pas situé le rotor lors de ladite génération de ladite au moins une impulsion électrique.

11. Procédé de communication selon la revendication 9, **caractérisé en ce que**, si la condition de la deuxième étape ou la condition de la troisième étape dans la revendication 9 n'est pas remplie, effectuer une impulsion électrique motrice de manière à faire avancer d'un pas le rotor et positionner ainsi ce rotor respectivement dans la seconde position de repos ou dans la première position de repos ; et ensuite répéter les étapes de la revendication 11 de sorte à déterminer si la condition de la deuxième étape ou la condition de la troisième étape dans cette revendication 11 est alors remplie, pour s'assurer que le dispositif de communication extérieur a commencé d'émettre ledit signal magnétique et ensuite, si tel est le cas, commencer l'étape de génération d'impulsions électriques de détection (82).

12. Procédé de communication selon la revendication 7, **caractérisé en ce que**, lors de l'étape de génération d'au moins une impulsion électrique préliminaire (84) dans la bobine du moteur pas-à-pas, le dispositif de communication extérieur détermine la polarité, positive ou négative, de ladite au moins une impulsion électrique préliminaire ; **en ce que** le protocole de communication établit si ladite au moins une impulsion électrique préliminaire est générée en phase ou en contre-phase avec la position de repos du rotor et si les impulsions électriques de détection sont prévues avec le rotor dans la même position de repos que lors de l'émission de ladite au moins une impulsion électrique préliminaire ou non, de sorte que le dispositif de communication extérieur détermine, lors de ladite étape de sélection, le sens à donner au champ magnétique extérieur (H_{Ext}) du signal magnétique (70) pour satisfaire à la condition donnée pour ce sens en fonction de la position de repos du rotor.

13. Procédé de communication selon la revendication 7, **caractérisé en ce que**, lors de ladite étape de sélection, le dispositif de communication extérieur détermine si le rotor (3) est dans la première position de repos ou dans la seconde position de repos en détectant un flux magnétique de l'aimant permanent fuyant hors de la pièce d'horlogerie.

14. Procédé de communication selon une quelconque des revendications 6 à 13, **caractérisé en ce que** les impulsions électriques de détection (82) sont générées en contre-phase avec la position de repos du rotor (3), de sorte que ces impulsions électriques de détection ne sont pas motrices.

15. Procédé de communication selon la revendication 16, **caractérisé en ce que** ladite au moins une impulsion électrique préliminaire (84) est générée en contre-phase avec la position de repos du rotor (3), de sorte que ladite au moins une impulsion électrique préliminaire n'est pas motrice.

16. Procédé de communication selon une quelconque des revendications 6 à 15, **caractérisé en ce qu'**un protocole de communication définit la fréquence de codage et la fréquence d'impulsion en leur attribuant une même valeur.

17. Procédé de communication selon une quelconque des revendications 6 à 15, **caractérisé en ce que**, lors de l'étape de génération d'au moins une impulsion électrique préliminaire, les moyens de communication de la pièce d'horlogerie génèrent une pluralité d'impulsions électriques préliminaires (84) fournies à la bobine à ladite fréquence d'impulsion et le dispositif de communication extérieur (100) reçoit respectivement une pluralité d'impulsions magnétiques engendrées par ladite pluralité d'impulsions électriques préliminaires circulant dans la bobine ; et **en ce que** le dispositif de communication extérieur détecte, sur la base de la réception de la pluralité d'impulsions magnétiques, la fréquence d'impulsion, le dispositif de communication extérieur sélectionnant une fréquence de codage égale à la fréquence d'impulsions détectée.

18. Procédé de communication selon une quelconque des revendications précédentes, **caractérisé en ce que** les moyens de communication de la pièce d'horlogerie peuvent émettre un message codé (60) sous forme de bits pour sa réception par le dispositif de communication extérieur en générant une pluralité d'impulsions électriques de codage (62) fournies à la bobine (18), laquelle génère une pluralité d'impulsions magnétiques correspondantes ; et **en ce que** chaque impulsion électrique de codage correspond à un bit de valeur '1' du message codé, le dispositif de communication extérieur détectant la succession de bits dudit message codé, soit '1' lors de la détection d'une des impulsions magnétiques correspondantes, soit '0' en l'absence d'impulsion magnétique.
